# EUROPÄISCHE PATENTSCHRIFT

(11) **EP 4 008 939 B1**
(45) Veröffentlichungstag und Bekanntmachung des Hinweises auf die Patenterteilung: **31.07.2024**
(21) Anmeldenummer: 21211077.9
(22) Anmeldetag: 29.11.2021
(51) Int. Cl.: A47L 9/28, F16K 15/06, F16K 31/00, F16K 31/08, A47L 9/00

(54) **VAKUUMBEGRENZUNGSVENTIL**
VACUUM LIMITING VALVE
SOUPAPE DE LIMITATION DE VIDE

(30) Priorität: 04.12.2020 DE 102020132296
(43) Veröffentlichungstag der Anmeldung: 08.06.2022
(73) Patentinhaber: Ruwac Industriesauger GmbH, 49328 Melle (DE)
(72) Erfinder: WELKENER, Thomas, 49328 Melle (DE); MITHÖFER, Christian, 49328 Melle (DE); MARON, Alexander, 49328 Melle (DE); HEIMANN, Alexej, 49328 Melle (DE); LASKOWSKI, Andreas, 49328 Melle (DE)
(74) Vertreter: Hoefer & Partner Patentanwälte mbB

(56) Entgegenhaltungen:
- EP-A1- 0 955 003
- CN-A- 104 235 475
- DE-A1- 102006 020 354
- DE-A1- 102007 020 692
- DE-B- 1 262 708
- DE-U1- 29 707 905
- US-A1- 2015 362 088

## Beschreibung

Die Erfindung betrifft eine Reinigungsvorrichtung mit einem Vakuumbegrenzungsventil, das insbesondere als Nebenluftventil einer saugenden Reinigungsvorrichtung zur Anwendung kommt.

Bei Verdichtern, insbesondere zum Absaugen von Luft, wird im Regelfall ein Vakuumbegrenzungsventil eingesetzt. Insbesondere ist dies der Fall, wenn zwangsfördernde Verdichter, wie beispielsweise Seitenkanalverdichter, verwendet werden. Solche Vakuumbegrenzungsventile sind auch als Nebenluftventile zu bezeichnen.

Das Vakuumbegrenzungsventil verhindert, dass eine Überlastung beim Antrieb des Verdichters eintritt, wodurch Schäden vermieden werden. In der Absaugtechnik öffnet sich das Ventil, sobald der Strömungswiderstand in der Luftströmungsleitung (Saugleitung) ansteigt oder blockiert wird und sich eine erhebliche Druckdifferenz im Verdichter bildet. Herkömmliche Ventile weisen hierzu eine mechanische Feder auf. Infolge der linearen Federkraft öffnet sich das Ventil immer weiter, je höher die entstehende Druckdifferenz im Verdichter ist, um den fehlenden Druck bzw. den fehlenden Luftvolumenstrom auszugleichen. Die Feder schließt das Ventil selbstständig, sobald der Differenzdruck unter einen bestimmten Wert abfällt. Problematisch ist dabei, dass aufgrund der linearen Federkraft das Ventil sich bereits zu öffnen beginnt, auch wenn noch keine kritische Überlastung des Antriebs zu erwarten ist. Durch die frühzeitige leichte Öffnung des Ventils treten Druck- und Strömungsverluste auf. EP 0 955 003 A1 zeigt eine bekannte Reinigungsvorrichtung mit einem Vakuumbegrenzungsventil.

Es ist Aufgabe vorliegender Erfindung, ein Vakuumbegrenzungsventil einer Reinigungsvorrichtung anzugeben, das ab einem bestimmten Unterdruck zuverlässig und möglichst vollständig öffnet.

Die Lösung dieser Aufgabe erfolgt durch die Merkmale des unabhängigen Anspruchs 1. Die abhängigen Ansprüche haben vorteilhafte Ausgestaltungen der Erfindung zum Gegenstand.

Im Rahmen der Erfindung wurde erkannt, dass das Vakuumbegrenzungsventil nicht primär durch ein elastisches Element, beispielsweise eine Feder, zuzuhalten ist, sondern ein Permanentmagnet eingesetzt werden sollte. Durch die Verwendung des Permanentmagneten zum Zuhalten des Vakuumbegrenzungsventils ist dessen Öffnungsbewegung nicht mehr von der linearen Federkraft abhängig, sondern kann ab einer vorbestimmten Druckdifferenz sehr abrupt und im Wesentlichen unmittelbar vollständig geöffnet werden.

Das hier vorgestellte Vakuumbegrenzungsventil umfasst eine Basis mit einer Ventilöffnung. Innenseitig an der Ventilöffnung ist ein Ventilsitz ausgebildet. Insbesondere umgibt dieser Ventilsitz ringförmig die Ventilöffnung. Besonders bevorzugt befindet sich am Ventilsitz eine Dichtung; insbesondere eine ringförmige Dichtung. Zum Toleranzausgleich ist die Dichtung vorzugsweise elastisch.

Die Basis ist vorzugsweise plattenförmig ausgebildet und wird saugseitig in einen Verdichter integriert oder in die Saugleitung eingebaut, die zum Verdichter führt. Die Ventilöffnung in der Basis führt von einer Innenseite des Vakuumbegrenzungsventils zu einer Außenseite des Vakuumbegrenzungsventils. Bei Benutzung des Vakuumbegrenzungsventils ist die Innenseite der Basis mit dem Unterdruck beaufschlagt. Die Ventilöffnung führt vorzugsweise zur Atmosphäre.

Des Weiteren umfasst das Vakuumbegrenzungsventil einen Ventildeckel, der im geschlossenen Zustand des Ventils dichtend am Ventilsitz anliegt. Insbesondere liegt der Ventildeckel innen am Ventilsitz an. Der Ventildeckel ist nach innen zur Freigabe der Ventilöffnung und somit zum Öffnen des Vakuumbegrenzungsventils bewegbar. Zusätzlich oder alternativ zu der o.g. Dichtung am Ventilsitz kann auch an der entsprechenden Fläche des Ventildeckels eine Dichtung verwendet werden.

Durch den Unterdruck in der Saugleitung bzw. im Verdichter wird bei entsprechend großem Differenzdruck (gegenüber der Atmosphäre) der Ventildeckel nach innen und somit vom Ventilsitz wegbewegt. Dadurch öffnet sich das Vakuumbegrenzungsventil.

Das Vakuumbegrenzungsventil umfasst eine Zuhaltevorrichtung. Diese Zuhaltevorrichtung setzt sich aus zwei Halteelementen zusammen, die sich gegenseitig magnetisch anziehen. Das erste Halteelement ist ortsfest angeordnet. Das zweite Halteelement ist mit dem Ventildeckel verbunden. Zumindest eines der beiden Halteelemente ist ein Permanentmagnet. Das jeweils andere Halteelement kann ebenfalls ein Permanentmagnet sein oder ist aus ferromagnetischem Material gefertigt. Besonders bevorzugt ist vorgesehen, dass das zweite Halteelement ein Permanentmagnet ist und das erste Halteelement eine Stahlplatte ist.

Im geschlossenen Zustand wird das Vakuumbegrenzungsventil durch die beiden sich anziehenden Halteelemente zugehalten. Insbesondere liegen dabei die beiden Halteelemente aneinander an. Durch entsprechend großen Unterdruck an der Innenseite des Vakuumbegrenzungsventils wird der Ventildeckel nach innen gezogen. Mit dem Ventildeckel bewegt sich auch das zweite Halteelement und entfernt sich somit vom ersten Halteelement.

Durch die Entfernung der beiden Halteelemente voneinander nimmt die magnetische Anziehungskraft schlagartig ab, so dass sich das Vakuumbegrenzungsventil vollständig öffnet.

Das Vakuumbegrenzungsventil umfasst erfindungsgemäß ein elastisches Element, das den Ventildeckel in Richtung seiner Schließlage beaufschlagt. Das elastische Element ist insbesondere eine Feder, beispielsweise eine spiralförmige Druckfeder.

Es ist insbesondere vorgesehen, dass die zuhaltende Kraft des Vakuumbegrenzungsventils in erster Linie durch die sich magnetisch anziehenden Halteelemente erzeugt werden. Lediglich zur Feineinstellung des Öffnungsdifferenzdrucks bzw. zum sicheren Schließen ist das elastische Element vorgesehen.

Durch die sich anziehenden Halteelemente wirkt, definiert in Schließlage, eine Magnetkraft Fm auf den Ventildeckel. Gleichzeitig wirkt durch das elastische Element eine Federkraft Ff auf den Ventildeckel. Diese Kraft wird hier als "Federkraft" bezeichnet, kann jedoch auch von einem anderen elastischen Element als einer Feder erzeugt werden. Insbesondere wird die Federkraft in Schließlage des Ventildeckels erzeugt, indem das elastische Element entsprechend vorgespannt ist.

Erfindungsgemäß ist vorgesehen, dass die Magnetkraft Fm in Schließlage größer ist als die Federkraft Ff. Insbesondere beträgt die Magnetkraft Fm zumindest das 2-fache der Federkraft Ff, weiter vorzugsweise beträgt die Magnetkraft Fm zumindest das 5-fache der Federkraft Ff, besonders vorzugsweise beträgt die Magnetkraft Fm zumindest das 10-fache der Federkraft Ff.

Es ist insbesondere vorgesehen, dass das Vakuumbegrenzungsventil "ansteuerlos" ist. Dies bedeutet, dass das Vakuumbegrenzungsventil weder elektrisch noch hydraulisch noch pneumatisch oder auf sonstige Weise ansteuerbar ist und somit geöffnet oder geschlossen werden kann. Lediglich in Abhängigkeit des an der Innenseite des Vakuumbegrenzungsventils anliegenden Unterdrucks ergibt sich eine Öffnung bzw. Schließung des Vakuumbegrenzungsventils. Insbesondere weist die Zuhaltevorrichtung sowie das gesamte Vakuumbegrenzungsventil keinen Elektromagneten auf.

Es ist bevorzugt vorgesehen, dass der Ventildeckel mit einer Ventilstange verbunden ist. Das zweite Halteelement, also insbesondere der Permanentmagnet, befindet sich vorzugsweise an der Ventilstange. Insbesondere ist die Ventilstange mit ihrem innenliegenden Ende mit dem Ventildeckel verbunden und erstreckt sich durch die Ventilöffnung nach außen. Das zweite Halteelement ist insbesondere an dem außenliegenden Ende der Ventilstange angeordnet. Das elastische Element ist vorzugsweise als Druckfeder ausgebildet und sitzt auf der Ventilstange. Insbesondere ist vorgesehen, dass auf der Ventilstange eine Mutter aufgeschraubt ist, gegen die sich das elastische Element abstützt. Mittels dieser Mutter kann die Federkraft eingestellt werden.

Des Weiteren ist bevorzugt vorgesehen, dass die Basis einen Stützbereich umfasst, der sich quer über die Ventilöffnung erstreckt. Die Ventilstange kann durch diesen Stützbereich hindurchverlaufen und kann in dem Stützbereich linear beweglich geführt sein. Alternativ oder zusätzlich ist vorgesehen, dass das elastische Element, insbesondere ausgebildet als Druckfeder, gegen diesen Stützbereich anliegt. Der Stützbereich ist vorzugsweise so ausgebildet, dass er möglichst wenig Fläche der Ventilöffnung verdeckt.

Des Weiteren ist bevorzugt vorgesehen, dass sich die Ventilstange parallel zu einer Ventilachse erstreckt. Entlang dieser Ventilachse erfolgt die Öffnung des Ventildeckels, so dass die Öffnungsrichtung des Ventildeckels parallel zur Ventilachse und somit parallel zur Ventilstange ausgerichtet ist. Insbesondere ist das zweite Halteelement zum Öffnen des Ventildeckels parallel zu der Öffnungsrichtung vom ersten Halteelement weg bewegbar.

Das erste Halteelement, insbesondere ausgebildet als Stahlplatte, ist erfindungsgemäß mittels einer Befestigungsvorrichtung an der Basis befestigt. Insbesondere weist die Befestigungsvorrichtung einen oder mehrere Füße auf, die sich seitlich der Ventilstange erstrecken. Dadurch umgreift die Befestigungsvorrichtung die Ventilstange und das erste Halteelement kann gegenüber dem außenliegenden Ende der Ventilstange angeordnet werden. Besonders bevorzugt ist die Befestigungsvorrichtung zusammen mit dem ersten Halteelement, ausgebildet als Stahlplatte, einstückig gefertigt.

Vorzugsweise ist/sind die Ventilstange und/oder das zweite Halteelement an einer Führung der Befestigungsvorrichtung linearbeweglich geführt. Dadurch erfolgt vorzugsweise nicht nur im Bereich der Basis eine Führung der Ventilstange, sondern auch am gegenüberliegenden Ende im Bereich der Befestigungsvorrichtung. Da sich hier das zweite Halteelement befindet, kann anstatt der Ventilstange auch dieses Halteelement geführt werden.

Anstatt einer festen bzw. einstückigen Ausgestaltung des ersten Halteelements mit der Befestigungsvorrichtung, ist erfindungsgemäß vorgesehen, dass das erste Halteelement bewegbar an der Befestigungsvorrichtung angeordnet ist, sodass eine Überlappung des ersten Halteelements mit dem zweiten Halteelement einstellbar ist, wodurch sich die Magnetkraft Fm einstellen lässt. Dadurch kann das baugleiche Vakuumbegrenzungsventil für verschiedene Verdichter verwendet werden, wobei bei der Montage die benötigte Magnetkraft Fm eingestellt wird.

Zur Veränderung der Überlappung ist das erste Halteelement vorzugsweise waagerecht zur Öffnungsrichtung des Ventils bewegbar.

Die definierte Relation der Magnetkraft Fm zur Federkraft Ff bezieht sich vorzugsweise auf die maximal einstellbare Magnetkraft Fm und die maximal einstellbare Federkraft Ff, sofern auch die Federkraft einstellbar ist.

Vorzugsweise umfasst die Befestigungsvorrichtung einen Grundkörper, der insbesondere mit der Basis verbunden ist und die Ventilstange umgreift. Auf dem Grundkörper ist vorzugsweise ein Deckel der Befestigungsvorrichtung drehbar gelagert, wobei das erste Halteelement zwischen Grundkörper und Deckel angeordnet ist und durch Drehen des Deckels relativ zum Grundkörper bewegbar ist. Der Deckel und/oder der Grundkörper ist/sind vorzugsweise aus nicht-magnetisierbarem Material, insbesondere Kunststoff, gefertigt.

Vorzugsweise ist das erste Halteelement am Grundkörper geführt und wird über eine zwischen Deckel und erstem Halteelement ausgebildete Kulissenführung bewegt, insbesondere in einer zur Öffnungsrichtung waagerechten Ebene.

Die Erfindung umfasst ferner einen Verdichter. Der Verdichter ist insbesondere als Seitenkanalverdichter ausgebildet. Der Verdichter ist zum Ansaugen von Gas, insbesondere Luft, ausgebildet. Der Verdichter umfasst das hier beschriebene Vakuumbegrenzungsventil. Ferner umfasst die Erfindung eine Reinigungsvorrichtung mit einem Verdichter. Bei dem Verdichter handelt es sich wiederum vorzugsweise um einen Seitenkanalverdichter. Die Reinigungsvorrichtung ist zum Ansaugen von Luft, ggf. samt Verunreinigungen, ausgebildet und umfasst ein hier beschriebenes Vakuumbegrenzungsventil in der Saugleitung oder unmittelbar saugseitig im Verdichter. Das Vakuumbegrenzungsventil ist hier als Nebenluftventil angeordnet.

Die Erfindung ersetzt das herkömmliche Nebenluftventil beim Verdichter, insbesondere Seitenkanalverdichter. Anders als bei herkömmlichen Ventilen mit einer federbelasteten Öffnung weist die Erfindung einen Permanentmagneten in der Zuhaltevorrichtung auf. In Kombination mit dem elastischen Element kann ein beliebiger Druck für das Öffnen des Ventils eingestellt werden, so dass in der Absaugtechnik ein Verdichter viel effizienter eingesetzt werden kann. Dabei öffnet sich das Ventil für die Nebenluft vollständig, wenn eine reale Wahrscheinlichkeit für eine Überlastung bevorsteht bzw. ein Grenzdruck erreicht worden ist. Ziel dabei ist es, dass das Ventil entweder komplett verschlossen bleibt oder bei bevorstehender Überlastung des Antriebs sich komplett öffnet und nicht etwa teilweise öffnet. Weitere Einzelheiten, Vorteile und Merkmale der vorliegenden Erfindung ergeben sich aus nachfolgender Beschreibung von Ausführungsbeispielen anhand der Zeichnung. Es zeigen:
- Fig. 1: eine perspektivische Ansicht eines Vakuumbegrenzungsventils gemäß einem ersten, nicht erfundungsgemäßen Ausführungsbeispiel,
- Fig. 2: eine Schnittansicht des Vakuumbegrenzungsventils aus Fig. 1,
- Fig. 3: eine schematische Ansicht einer erfindungsgemäßen Reinigungsvorrichtung mit Verdichter und erfindungsgemäßem Vakuumbegrenzungsventil gemäß beiden Ausführungsbeispielen, und
- Fig. 4: eine Schnittansicht des erfindungsgemäßen Vakuumbegrenzungsventils gemäß einem zweiten Ausführungsbeispiel.

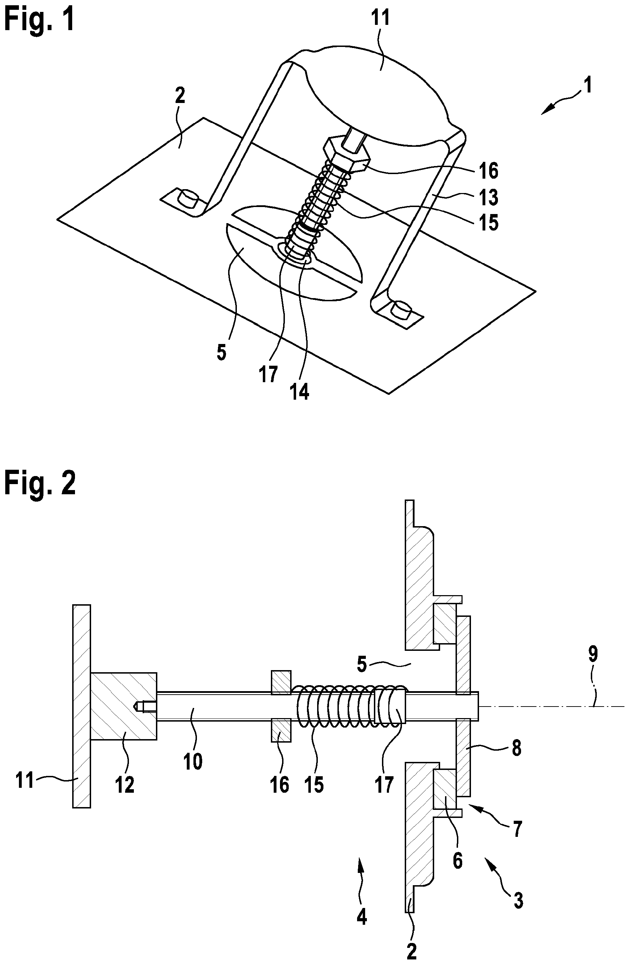

Die Fig. 1 und 2 zeigen, dass ein nicht erfindungsgemäßes Vakuumbegrenzungsventil 1 mit einer Basis 2. An der Basis 2 sind eine Innenseite 3 und eine Außenseite 4 definiert. In der Basis 2 ist eine Ventilöffnung 5 vorgesehen, die die üblicherweise mit Innendruck beaufschlagte Innenseite 3 mit der atmosphärenseitigen Außenseite 4 verbindet.

An der Innenseite der Ventilöffnung 5 befindet sich ein Ventilsitz 7, im gezeigten Beispiel durch eine Dichtung 6 gebildet. An dem Ventilsitz 7 liegt ein Ventildeckel 8 an, der entlang einer Ventilachse 9 nach innen geöffnet werden kann.

Der Ventildeckel 8 ist mit einer Ventilstange 10 verbunden. Die Ventilstange 10 erstreckt sich entlang der Ventilachse 9 nach außen.

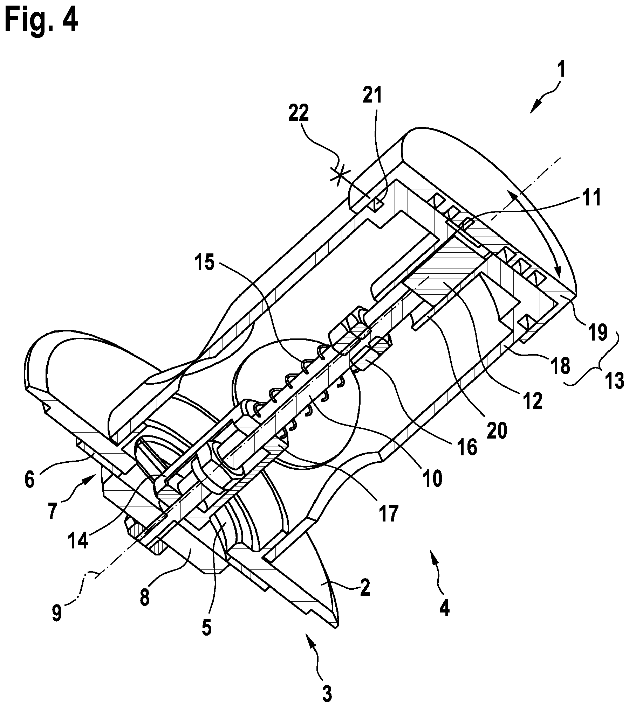

An der Außenseite 4 weist das Vakuumbegrenzungsventil 1 eine magnetische Zuhaltevorrichtung auf. Diese umfasst ein erstes Halteelement 11, das ortsfest (oder gemäß Fig. 4 beweglich) angeordnet ist und im gezeigten Ausführungsbeispiel als Stahlplatte verwirklicht ist. Das erste Halteelement 11 wirkt mit einem zweiten Halteelement 12 zusammen. Das zweite Halteelement 12 ist als Permanentmagnet ausgebildet und befindet sich an dem außenseitigen Ende der Ventilstange 10. In den gezeigten Darstellungen nach Fig. 1 und 2 ist das Vakuumbegrenzungsventil 1 geschlossen. Entsprechend liegt der Ventildeckel 8 am Ventilsitz 7 an und das zweite Halteelement 12 liegt am ersten Halteelement 11 an.

Insbesondere Fig. 1 verdeutlicht in der schematischen Darstellung eine Befestigungsvorrichtung 13, die außenseitig auf der Basis 2 befestigt ist und dazu verwendet wird, um das erste Halteelement 11 gegenüber dem außenliegenden Ende der Ventilstange 10 bzw. gegenüber dem zweiten Halteelement 12 zu positionieren. Im gezeigten Beispiel weist diese Befestigungsvorrichtung 13 zwei Füße auf, die sich von der Basis 2 erstrecken. Diese Füße sind einteilig mit dem als Stahlplatte ausgebildeten ersten Halteelement 11 gebildet. Fig. 1 zeigt ferner, dass sich quer über die Ventilöffnung 5 ein Stützbereich 14 erstreckt, der integraler Bestandteil der Basis 2 sein kann. Die Ventilstange 10 verläuft durch den Stützbereich 14 hindurch und kann in dem Stützbereich 14 linear beweglich geführt sein.

Ferner zeigen die Fig. 1 und 2 ein elastisches Element 15, hier ausgebildet als spiralförmige Druckfeder auf der Ventilstange 10. Das elastische Element 15 kann mittels einer Mutter 16 vorgespannt sein, entsprechend stützt sich das elastische Element 15 einerseits gegen die Mutter 16 und andererseits gegen den Stützbereich 14 ab.

Gemäß Fig. 1 und 2 kann ein Anschlag 17 verwendet werden, um eine Öffnungsbewegung des Ventildeckels 8 bzw. der Ventilstange 10 zu begrenzen. Im gezeigten Beispiel ist dieser Anschlag 17 durch eine Hülse gebildet, die auf der Ventilstange 10 steckt. Bei entsprechend großer Öffnung des Vakuumbegrenzungsventils 1 schlägt die Mutter 16 am hülsenförmigen Anschlag 17 an.

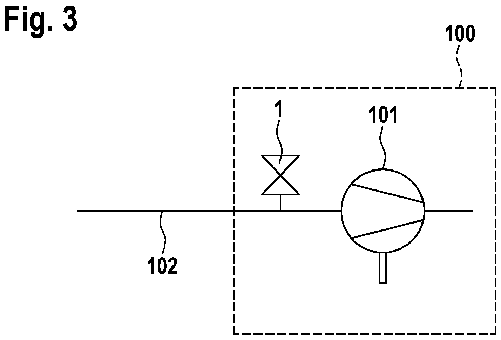

Fig. 3 zeigt rein schematisch eine Reinigungsvorrichtung 100 mit einem Verdichter 101, insbesondere ausgebildet als Seitenkanalverdichter. Die Reinigungsvorrichtung 100 dient zum Absaugen von Luft, gegebenenfalls samt Verunreinigungen. Dies erfolgt über eine entsprechende Saugleitung 102. In der Saugleitung 102 oder unmittelbar im Verdichter 101 wird das Vakuumbegrenzungsventil 1 gemäß einem der beiden Ausführungsbeispiele als Nebenluftventil angeordnet.

Fig. 4 zeigt das Vakuumbegrenzungsventil 1 gemäß dem zweiten, erfindungsgemäßen Ausführungsbeispiel im Schnitt. Gleiche bzw. funktional gleiche Bauteile sind in beiden Ausführungsbeispielen mit denselben Bezugszeichen versehen. Die beiden Vakuumbegrenzungsventile 1 gemäß den beiden Ausführungsbeispielen sind funktional gleich; bis auf die folgenden Unterschiede:
Das zweite Halteelement 12 ist an einer Führung 20 der Befestigungsvorrichtung 13 linearbeweglich geführt. Dadurch erfolgt nicht nur am Stützbereich 14 eine Führung der Ventilstange 10, sondern auch am gegenüberliegenden Ende im Bereich der Befestigungsvorrichtung 13. Da sich hier das zweite Halteelement 12 befindet, ist anstatt der Ventilstange 10 dieses Halteelement 12 geführt.

Anstatt einer festen bzw. einstückigen Ausgestaltung des ersten Halteelements 11 mit der Befestigungsvorrichtung 13, ist das erste Halteelement 11 bewegbar an der Befestigungsvorrichtung 13 angeordnet, sodass eine Überlappung des ersten Halteelements 11 mit dem zweiten Halteelement 12 einstellbar ist, wodurch sich die Magnetkraft Fm einstellen lässt. Zur Veränderung der Überlappung ist das erste Halteelement 11 senkrecht zur Ventilachse 9 bewegbar.

Gemäß Fig. 4 umfasst die Befestigungsvorrichtung 13 einen Grundkörper 18, der mit der Basis 2 verbunden ist und die Ventilstange 10 umgreift. Auf dem Grundkörper 18 ist ein Deckel 19 der Befestigungsvorrichtung 13 drehbar gelagert, wobei das erste Halteelement 11 zwischen Grundkörper 18 und Deckel 19 angeordnet ist und durch Drehen des Deckels 19 relativ zum Grundkörper 18 bewegbar ist. Das erste Halteelement 11 ist am Grundkörper 18 geführt und wird z.B. über eine zwischen Deckel 19 und erstem Halteelement 11 ausgebildete Kulissenführung bewegt.

Durch Drehen des Deckels 19 im Uhrzeigersinn bewegt sich das erste Halteelement 11 bis zu vollständigen Überlappung mit der Stirnseite des zweiten Halteelements 12. Bei Drehen in entgegengesetzter Richtung, wird der Grad der Überlappung verringert.

Der Grundkörper 18 weist eine Nut 21 auf. Der Deckel 19 ist mittels eines Sicherungselementes 22, das in diese Nut ragt, gegen Abziehen gesichert und geleichzeitig drehbar, wobei durch weiteres Einschrauben des Sicherungselementes 22 der Drehwinkel des Deckels 19 und somit die eingestellte Magnetkraft festgesetzt werden kann.

### Bezugszeichenliste

- 1: Vakuumbegrenzungsventil
- 2: Basis
- 3: Innenseite
- 4: Außenseite
- 5: Ventilöffnung
- 6: Dichtung
- 7: Ventilsitz
- 8: Ventildeckel
- 9: Ventilachse
- 10: Ventilstange
- 11: erstes Halteelement
- 12: zweites Halteelement
- 13: Befestigungsvorrichtung
- 14: Stützbereich
- 15: elastisches Element
- 16: Mutter
- 17: Anschlag
- 18: Grundkörper
- 19: Deckel
- 20: Führung
- 21: Nut
- 22: Sicherungselement
- 100: Reinigungsvorrichtung
- 101: Verdichter
- 102: Saugleitung

## Patentansprüche

1. Reinigungsvorrichtung umfassend einen Verdichter (101), insbesondere Seitenkanalverdichter, zum Ansaugen von Luft und ein Vakuumbegrenzungsventil (1) als Nebenluftventil in der Saugleitung (102) oder im Verdichter (101), wobei das Vakuumbegrenzungsventil (1) umfasst:
• eine Basis (2) mit einer Ventilöffnung (5) und einem die Ventilöffnung (5) innenseitig umgebenden Ventilsitz (7),
• einen Ventildeckel (8), der dichtend am Ventilsitz (7) anliegt und nach Innen zur Freigabe der Ventilöffnung (5) bewegbar ist,
• eine den Ventildeckel (8) im Ventilsitz (7) haltende Zuhaltevorrichtung mit zwei sich magnetisch anziehenden Halteelementen (11, 12), wobei das erste Halteelement (11) ortsfest angeordnet ist und das zweite Halteelement (12) mit dem Ventildeckel (8) verbunden ist, und wobei zumindest eines der beiden Halteelemente (11, 12) ein Permanentmagnet ist,
• und ein elastisches Element (15), das den Ventildeckel (8) in seine Schließlage beaufschlagt,
· wobei das erste Halteelement (11) mittels einer Befestigungsvorrichtung (13) an der Basis (2) befestigt ist,
• wobei in Schließlage des Ventildeckels (8) durch die sich anziehenden Halteelemente (11, 12) eine Magnetkraft, Fm, und durch das elastische Element (15) eine Federkraft, Ff, auf den Ventildeckel wirken,
**dadurch gekennzeichnet, dass** Fm größer ist als Ff,
• und, dass das erste Halteelement (11) bewegbar an der Befestigungsvorrichtung (13) angeordnet ist, sodass eine Überlappung des ersten Halteelements (11) mit dem zweiten Halteelement (12) und/oder ein Abstand zwischen dem ersten Halteelement (11) und dem zweiten Halteelement (12) einstellbar ist.

2. Reinigungsvorrichtung nach Anspruch 1, wobei die Zuhaltevorrichtung ansteuerlos, insbesondere ohne Elektromagnet, ausgestaltet ist.

3. Reinigungsvorrichtung nach einem der vorhergehenden Ansprüche, wobei der Ventildeckel (8) mit einer Ventilstange (10) verbunden ist, die vorzugsweise durch die Ventilöffnung (5) nach außen ragt, und wobei das zweite Halteelement (12) an der Ventilstange (10) angeordnet ist.

4. Reinigungsvorrichtung nach Anspruch 3, wobei das elastische Element (15) als Druckfeder auf der Ventilstange (10) sitzt.

5. Reinigungsvorrichtung nach einem der Ansprüche 3 oder 4, wobei sich quer über die Ventilöffnung (5) ein Stützbereich (14) erstreckt, an dem das elastische Element (15) anliegt und/oder in dem die Ventilstange (10) geführt ist.

6. Reinigungsvorrichtung nach einem der Ansprüche 3 bis 5, wobei sich die Ventilstange (10) parallel zu einer Öffnungsrichtung des Ventildeckels (8) erstreckt und wobei das zweite Halteelement (12) zum Öffnen des Ventildeckels (8) parallel zu der Öffnungsrichtung vom ersten Halteelement (11) weg bewegbar ist.

7. Reinigungsvorrichtung nach einem der Ansprüche 3 bis 6, wobei die Befestigungsvorrichtung (13) die Ventilstange (10) umgreift, sodass das erste Halteelement (11) gegenüber dem außenliegenden Ende der Ventilstange (10) angeordnet ist.

8. Reinigungsvorrichtung nach einem der Ansprüche 3 bis 7, wobei die Ventilstange (10) und/oder das zweite Halteelement (12) an einer Führung (20) der Befestigungsvorrichtung (13) linearbeweglich geführt ist/sind.

9. Reinigungsvorrichtung nach einem der vorhergehenden Ansprüche, wobei die Befestigungsvorrichtung (13) einen Grundkörper (18) umfasst, auf dem ein Deckel (19) drehbar gelagert ist, wobei das erste Halteelement (11) zwischen Grundkörper (18) und Deckel (19) angeordnet ist und durch Drehen des Deckels (19) relativ zum Grundkörper (18) bewegbar ist.

## Claims

1. A cleaning device comprising a compressor (101), in particular side channel compressor, to suck in air and a vacuum limiting valve (1) as secondary air valve in the suction line (102) or in the compressor (101), wherein the vacuum limiting valve (1) comprises
- a base (2) with a valve opening (5) and a valve seat (7) surrounding the valve opening (5) in the interior,
- a valve cover (8), which abuts the valve seat (7) in a sealing manner and is movable inwards to release the valve opening (5),
- a locking device holding the valve cover (8) in the valve seat (7) with two magnetically attracting holding elements (11, 12), wherein the first holding element (11) is arranged in in a fixed position and the second holding element (12) is connected to the valve cover (8), and wherein at least one of the two holding elements (11, 12) is a permanent magnet,
- and an elastic element (15), which biases the valve cover (8) into its closed position,
- wherein the first holding element (11) is fixed to the base (2) via a fixing device (13),
- wherein, in closed position of the valve cover (8), a magnetic force, Fm, by the holding elements (11, 12) attracting each other and a spring force, Ff, by the elastic element (15) act on the valve cover,
- **characterised in that** Fm is greater than Ff, and
- that the first holding element (11) is arranged movably at the fixing device (13), so that an overlap of the first holding element (11) with the second holding element (12) and/or a distance between the first holding element (11) and the second holding element (12) is adjustable.

2. The cleaning device according to claim 1, wherein the locking device is configured without controlling, in particular without electromagnet.

3. The cleaning device according to any of the preceding claims, wherein the valve cover (8) is connected to a valve rod (10), which preferably projects outwards through the valve opening (5), and wherein the second holding element (12) is arranged at the valve rod (10).

4. The cleaning device according to claim 3, wherein the elastic element (15) is arranged as compression spring at the valve rod (10).

5. The cleaning device according to any of claims 3 or 4, wherein a support region (14) extends transversely above the valve opening (5), wherein against the support region (14) the elastic element (15) abuts and/or in the support region (14) the valve rod (10) is guided.

6. The cleaning device according to any of claims 3 to 5, wherein the valve rod (10) extends parallel to an opening direction of the valve cover (8) and wherein the second holding element (12) is movable away from the first holding element (11) parallel to the opening direction to open the valve cover (8).

7. The cleaning device according to any of claims 3 to 6, wherein the fixing device (13) engages around the valve rod (10), so that the first holding element (11) is arranged against the outer end of the valve rod (10).

8. The cleaning device according to any of claims 3 to 7, wherein the valve rod (10) and/or the second holding element (12) is/are guided linearly movably at a guiding (20) of the fixing device (13).

9. The cleaning device according to one of the preceding claims, wherein the fixing device (13) comprises a base body (18), at which a cover (19) is rotatably arranged, wherein the first holding element (11) is arranged between base body (18) and cover (19) and is movable relative to the base body (18) by rotating the cover (19).

## Revendications

1. Dispositif de nettoyage comprenant un compresseur (101), en particulier un compresseur de canal latéral, destiné à aspirer de l'air et une soupape de limitation de vide (1) en tant que soupape d'air auxiliaire dans le conduit d'aspiration (102) ou dans le compresseur (101), dans lequel la soupape de limitation de vide (1) comprend :
- une base (2) avec une ouverture de soupape (5) et un siège de soupape (7) entourant côté intérieur l'ouverture de soupape (5),
- un couvercle de soupape (8), qui repose de manière étanche sur le siège de soupape (7) et peut être déplacé vers l'intérieur pour dégager l'ouverture de soupape (5),
- un dispositif de blocage maintenant le couvercle de soupape (8) dans le siège de soupape (7) avec deux éléments de maintien (11, 12) s'attirant magnétiquement, dans lequel le premier élément de maintien (11) est disposé de manière stationnaire et le deuxième élément de maintien (12) est relié au couvercle de soupape (8), et dans lequel au moins un des deux éléments de maintien (11, 12) est un aimant permanent,
- et un élément élastique (15), qui soumet le couvercle de soupape (8) à une action dans sa position de fermeture,
dans lequel le premier élément de maintien (11) est fixé sur la base (2) au moyen d'un dispositif de fixation (13),
- dans lequel une force magnétique Fm, par les éléments de maintien (11, 12) s'attirant, et une force de ressort Ff, par l'élément élastique (15) agissent sur le couvercle de soupape dans la position de fermeture du couvercle de soupape (8),
**caractérisé en ce que** Fm est plus grande que Ff,
et que
le premier élément de maintien (11) est disposé de manière à pouvoir être déplacé sur le dispositif de fixation (13) si bien qu'un chevauchement du premier élément de maintien (11) avec le deuxième élément de maintien (12) et/ou une distance entre le premier élément de maintien (11) et le deuxième élément de maintien (12) peuvent être réglés.

2. Dispositif de nettoyage selon la revendication 1, dans lequel le dispositif de blocage est configuré sans pilotage, en particulier sans électroaimant.

3. Dispositif de nettoyage selon l'une quelconque des revendications précédentes, dans lequel le couvercle de soupape (8) est relié à une tige de soupape (10), qui dépasse vers l'extérieur de préférence par l'ouverture de soupape (5), et dans lequel le deuxième élément de maintien (12) est disposé sur la tige de soupape (10).

4. Dispositif de nettoyage selon la revendication 3, dans lequel l'élément élastique (15) siège sur la tige de soupape (10) en tant que ressort de pression.

5. Dispositif de nettoyage selon l'une quelconque des revendications 3 ou 4, dans lequel une zone d'appui (14), sur laquelle l'élément élastique (15) repose et/ou dans laquelle la tige de soupape (10) est guidée, s'étend de manière transversale au-dessus de l'orifice de soupape (5).

6. Dispositif de nettoyage selon l'une quelconque des revendications 3 à 5, dans lequel la tige de soupape (10) s'étend de manière parallèle à une direction d'ouverture du couvercle de soupape (8) et dans lequel le deuxième élément de maintien (12) peut être déplacé de manière parallèle à la direction d'ouverture de manière à s'éloigner du premier élément de maintien (11) pour ouvrir le couvercle de soupape (8).

7. Dispositif de nettoyage selon l'une quelconque des revendications 3 à 6, dans lequel le dispositif de fixation (13) entoure la tige de soupape (10) si bien que le premier élément de maintien (11) est disposé par rapport à l'extrémité située à l'extérieur de la tige de soupape (10).

8. Dispositif de nettoyage selon l'une quelconque des revendications 3 à 7, dans lequel la tige de soupape (10) et/ou le deuxième élément de maintien (12) sont guidés de manière mobile linéairement sur une glissière (20) du dispositif de fixation (13).

9. Dispositif de nettoyage selon l'une quelconque des revendications précédentes, dans lequel le dispositif de fixation (13) comprend un corps de base (18), sur lequel un couvercle (19) est monté de manière à pouvoir tourner, dans lequel le premier élément de maintien (11) est disposé entre le corps de base (18) et le couvercle (19) et peut être déplacé par la rotation du couvercle (19) par rapport au corps de base (18).
